# EUROPEAN PATENT APPLICATION

(11) **EP 3 569 991 A1**
(43) Date of publication of application: **20.11.2019**
(21) Application number: 19173935.8
(22) Date of filing: 10.05.2019
(51) Int. Cl.: G01F 23/36

(54) **FUEL LEVEL SENSOR**

(30) Priority: 16.05.2018 GB 201807986
(71) Applicant: Delphi Automotive Systems Luxembourg SA, 4940 Bascharage (LU)
(72) Inventor: BORRELBACH, Lutwin, 54636 Messerich (DE); BUNGARTZ, Gerhard, 54634 Bitburg (DE)
(74) Representative: Delphi France SAS

(57) **Abstract**

Fuel level sensor (28) for sensing the level of liquid fuel in a fuel tank, the sensor comprising: a base frame (30) to be fixedly mounted relative to the tank; a pivoting arm (32) with pivotally connected to the base frame (30) and carrying a float (34); a variable resistor assembly (36) configured for translating the position of the float (34) into an electric signal; characterized in that the pivoting arm (32) and the base frame (30) are pivotally connected by a snap-fit connection (44); and in that the variable resistor assembly (36) comprises a resistor circuit (38) affixed to the pivoting arm (32) as well as contact fingers (40) fixedly mounted to the base frame (30) and configured to be in contact with the resistor circuit (38).

## Description

### TECHNICAL FIELD

The present invention generally relates to fluid level measurement sensors, and more particularly to a fuel level sensor for sensing the level of liquid fuel in a fuel tank.

### BACKGROUND OF THE INVENTION

The fuel level in a fuel tank of an automotive vehicle is measured with a fuel level sensor generally mounted inside the fuel tank. The sensor is driven by a float on the surface of the fuel responsive to changes in the level or depth of liquid fuel in the fuel tank. The float is further attached to a pivoting arm pivotally connected to a frame fixed relative to the tank. In cars for example, the fuel sensor is part of a fuel module.

Conventionally, a sensing signal is produced by a variable resistor assembly with a conductive wiper mechanically movable across contact segments of a resistor card. The wiper is affixed to the pivoting arm and comprises two contact terminals that engage respective arcuate contact areas of the resistor which is fixed to the frame. The terminals of the wiper create an electrical link between the contact areas. As the level of fuel within the tank changes, the float and the arm move together, thereby causing the wiper to sweep over the arcuate contact areas changing an effective length and consequently an effective resistance of the variable resistor. The output voltage of the variable resistor changes in accordance with the resistance change, and thus reflects the fuel level.

The fuel level sensor is generally preassembled with the fuel module and before insertion into the fuel tank. The fuel module itself comprises a fuel pump disposed in a fuel reservoir fixedly mounted within the fuel tank. The top of the fuel tank is provided with an opening for inserting the fuel module into the fuel tank. In a typical fuel level sensor, as it is known in the art, the float is a generally cylindrical part. The pivoting arm is a metallic, elongate rod with bent sections. For example, one end of the pivoting arm is bent into a U shape that passes through a bore of the float. The other end of the arm is bent in order to be fitted in a rotary coupling member pivotally mounted to a base frame fixed to an outside wall of the fuel reservoir of the fuel module.

The base frame carries the arcuate resistor. The rotary coupling member is mounted in front of the resistor and comprises the two contact fingers of the wiper in contact with the arcuate resistor.

Although the above fuel sensor design is widely used, some shortcomings can be pointed out. The design involves a diversity of parts and could be improved. The pivoting arm assembly is somewhat cumbersome with some loose connections, which is detrimental to the accuracy of the measurement. Furthermore, some measuring hysteresis may be observed. The connection of the resistor card to the associated fuel level indicator is carried out through wires soldered to the resistor card, whereby the solder points may alter and become loose with time. Finally, the float is held in place by a terminal, bent portion of the pivoting arm protruding out of the float; this protrusion creates a potential risk of damaging the fuel tank opening seal.

### OBJECT OF THE INVENTION

An object of the present invention is to provide an improved fuel level sensor that is more reliable and less complex than prior art solutions.

### GENERAL DESCRIPTION OF THE INVENTION

The invention overcomes the above discussed deficiencies and disadvantages by providing a fuel level sensor for sensing the level of liquid fuel in a fuel tank, the sensor comprising a base frame to be fixedly mounted relative to the tank; and a pivoting arm with pivotally connected to the base frame and carrying a float. It further includes a variable resistor assembly configured for translating the position of the float into an electric signal.

According to the invention, the pivoting arm and the base frame are pivotally connected by a snap-fit connection; and the variable resistor assembly comprises a resistor circuit affixed to the pivoting arm as well as contact fingers fixedly mounted to the base frame and configured to be in contact with the resistor circuit.

The present fuel level sensor comprises a limited number of components when compared to the state of the art. The lesser number of components implies fewer connections and hence less play in the whole assembly, improving the general accuracy and robustness of the sensor. In particular, the pivoting arm is easily mounted by a snap fit connection to the base frame.

As used herein, the term snap-fit generally means any connection between two parts, which are attached by pushing together their respective flexible, interlocking fixing members. Typically, the pivoting arm comprises, about a first end thereof, first fixing members cooperating with second fixing members located on the base frame to form the snap-fit connection. Any kind of appropriate snap-fit connection may be employed, including releasable snap fit means.

The pivoting arm advantageously comprises a supporting portion carrying the resistor circuit. The supporting portion is preferably arranged beyond the first fixing members to form a terminal extension of the pivoting arm.

In embodiments, the base frame is substantially U-shaped and includes a base from which extend two parallel walls defining an inner space; and the pivoting arm is configured such that the supporting portion moves in the inner space. Preferably, the second fixing members are positioned in the lower region of the frame.

Those skilled in the art may however devise other configurations. For example, the second fixing members may be located in the upper region of the frame, and the support plate may then be located on the body portion of the arm, below the first end, to remain within the inner space defined by the frame.

The second fixing members may include a pair of deformable clamp members positioned in alignment on each wall; and the first fixing members may comprise a pair of aligned cylindrical protrusions protruding on opposite sides of the pivoting arm. This provides a simple and efficient snap-fit connection that allows operational play for the pivoting arm to pivot with the float.

Advantageously, the resistor circuit comprises two distinct arcuate contact areas; and two separate contact fingers are affixed to the parallel wall facing the resistor circuit to be each in contact with a respective contact area, the contact fingers engaging their respective contact area from opposite sides of the frame.

The pivoting arm is preferably connected at its second end to the float by a snap-fit connection. Here again the connection is made easy and designed to allow some play for the float to pivot.

The float, which is a generally buoyant or hollow member, may be divided in two substantially identical volumes linked by an intermediate rod; and the pivoting arm is connected to the intermediate rod. Therefore, the second end of the pivoting arm may comprises a deformable clamp member configured to cooperate with the connection rod of the float. Such foat configuration float has a balanced shape around its connection, avoiding tensions in the pivoting arm.

According to another aspect, the invention concerns a fuel module comprising a reservoir with a fuel pump, and a fuel level sensor according to any one of the preceding claims. Advantageously, the fuel level sensor is fixed to an outer wall of the reservoir.

### BRIEF DESCRIPTION OF THE DRAWINGS

Further details and advantages of the present invention will be apparent from the following detailed description of not limiting embodiments with reference to the attached drawings, wherein:
- Fig. 1: is a perspective view of a preferred embodiment of a fuel module comprising the present fuel level sensor;
- Fig. 2: is a side view of the fuel level sensor of Fig. 1;
- Fig. 3: is a close up view of Fig. 2 showing the variable resistor assembly;
- Fig. 4: is a perspective view of the fuel level sensor of Fig. 1, with the float detached.

### DESCRIPTION OF PREFERRED EMBODIMENTS

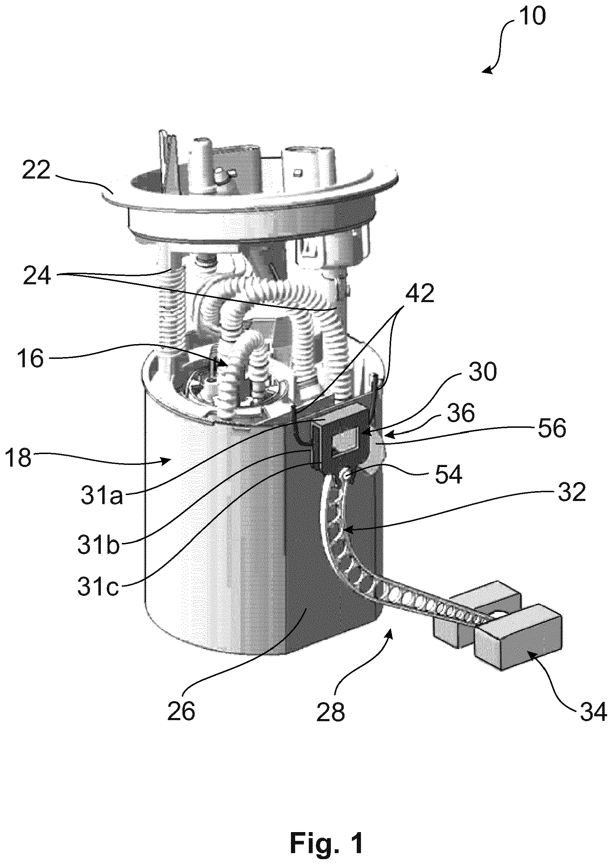

A preferred embodiment of the present fuel level sensor will now be described with reference to Figs. 1 to 4 in an exemplary application where the fuel level sensor is part of a fuel module 10. The fuel module 10 is installed inside a fuel tank through an opening (not shown). The fuel tank may be designed to contain liquid fuel such as for example diesel, gasoline, bio-fuels, etc.

The fuel module 10 conventionally comprises a fuel pump 16 disposed in a fuel reservoir 18 that is typically formed by a generally cup-shaped reservoir and is fixedly mounted within the fuel tank. The fuel module 10 further comprises a set plate 22 that closes the opening of the fuel tank. The reservoir 18 may be rigidly connected to the set plate 22 by means of spacing studs 24, although this is not required. The reservoir 18 reserves a fuel, which flows into the cup from within the fuel tank 10 and is drawn into the fuel pump 16 arranged in the reservoir 18. The fuel pump outlet is typically routed to an engine fuel supply line via an outlet duct and a supply port mounted in the set plate 22. The engine fuel supply line delivers fuel to the engine's injection system. Such fuel modules are known in the art and will not be further described since it is not the focus of the present invention.

The present fuel level sensor 28 is preferably fixedly mounted to the outer periphery of the reservoir 18, here on a flattened outer wall portion 26. The fuel level sensor 28 comprises a support/mounting member referred to as base frame 30 and a pivoting arm 32, which is pivotally connected to the base frame 30 and carries a float 34.

The base frame 30 is fixedly mounted to the outer wall portion 26 by any appropriate means, e.g. by form-fitting or clipping (e.g. engaging with tabs on the outer wall portion 26), screwing or gluing.

The fuel level sensor 28 includes a variable resistor assembly 36 comprising:
- a resistor circuit 38 that is carried by the pivoting arm 32 and hence moves therewith; and
- contact fingers 40 fixedly mounted to the base frame 30 to be in contact with the resistor circuit 38.

As described in more detail below, the variable resistor assembly 36 is configured to translate the position of the float 34 into an electric signal by changing its resistance value according to the angular position of the pivoting arm 32. The electrical signal -indicative of the fuel level- is sent via wires 42 connected to the contact fingers 40 to a fuel level indicator module, e.g within a passenger compartment of a vehicle.

The base frame 30 is, in the embodiment shown in the Figures, a single piece in the form of a U-shaped rectangular plate. It includes a base 31a and two parallel walls 31b and 31c extending downwardly from the base 31a and defining an inner space for the variable resistor assembly 36. In this variant, each wall 31b and 31c is actually designed as a rectangular frame, i.e. having a central opening 31d.

A first wall 31b of the base frame 30 is fixed to the outer reservoir wall 26; the contact fingers 40 of the variable resistor assembly 36 are fixedly mounted thereto.

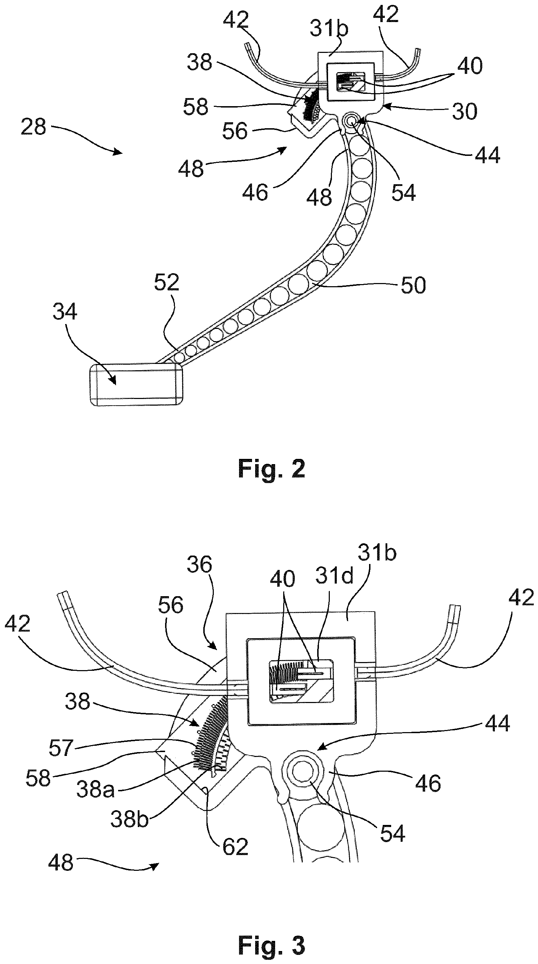

The walls 31b, 31c of the base frame 30 each comprise fixing means 44 adapted to form a snap-fit connection with the pivoting arm 32. As shown in Figs. 2 and 3 (note that these views are seen from the side of the wall 31b in contact with the reservoir), the snap-fit connection is created by two elastically deformable clamp members 46 (snap rings that are integral with the walls) that are designed to cooperate with corresponding fixing members of the pivoting arm 32. The skilled person will understand that any other suitable form or configuration providing a snap-fit connection (or clipping connection) may be used here.

Turning now to the pivoting arm 32, it has an elongated body 50 that is pivotally connected to the base frame 30 about a first end 48; and a second end 52 connected to the float 34. Reference sign 54 designates two cylindrical protrusions that extend on opposite sides of the pivoting arm. The cylindrical protrusions are preferably aligned on a same axis and compatible with the clamp members 46. The pivoting arm 32 being typically substantially flat, the protrusions 54 are preferably perpendicular to the arm body. The cylindrical protrusions 54 are configured to create the desired snap-fit connection with the clamps 46, with some play allowing free pivoting of the arm 32.

Assembly of the pivoting arm 32 is thus readily performed by centrally aligning the pivoting arm 32 in-between the two parallel walls 31b, 31c and engaging the protrusions 54 into the clamp members 46. Accordingly, assembly is swift and easy.

The first end 46 of the pivoting arm 32 also comprises a support plate 56 (forming a supporting portion) configured to receive the resistor circuit 38 of the variable resistor assembly 36. The support plate 56 is here a generally rectangular plate with an arcuate edge, although this is not required. The support plate 56 is located beyond the cylindrical protrusions 54, in continuation of the arm body 50, and thus forms a terminal extension of the pivoting arm 32. The plate may also have different shape and/or placement, or be replaced by any suitable supporting element. For example the supporting element may be a slot, a clamp, or a frame. The support plate 56 is conveniently made in one piece with the pivoting arm 32.

As the fuel level changes, the float 34 rises or lowers with the surface of the fuel causing the float arm 32 to pivot about the first end 48, thus causing the contact fingers 40 to slide, sweep, or wipe across a portion of the resistor circuit 38 to produce the fuel level electric signal carried by the wires 42 to the fuel level indicator.

The resistor circuit 38 may be formed on a support board or card by any appropriate technique to form a variable resistor card 58. Typically the resistor circuit 38 includes a ceramic substrate imprinted with variable resistor elements. More specifically, referring to Fig. 3, the resistor circuit 38 includes two contact areas: a generally resistive first contact area 38a and a generally conductive second contact area 38b. The contact areas form tracks or paths having a generally arcuate shape.

Conventionally, the resistive contact area 38a is preferably segmented to define a plurality of conductive contact segments 57 that are separated by open spaces. The plurality of conductive contact segments 57 is communicated to a corresponding resistor trace (not shown), which enables effective resistance of the resistive contact arc 38a to increase incrementally from one end of the arc-shaped contact area to the opposite end. In contrast to the segmented resistive contact arc 38a, the conductive contact arc 38b is preferably continuous from one end to the other. The conductive contact arc 38b is spaced radially inside of the resistive contact arc 38a. Those of ordinary skill in the art will recognize that the conductive contact arc 38b could also be provided instead as a generally resistive contact arc having spaced apart resistive segments in contact with resistor segments (similar to the resistive contact arc 38a). Such resistor cards with arcuate contact areas and its manufacturing process are well known in the art (see, e.g., US 7,091,819).

The resistor card 58 may be inserted into a receiver slot 62 of the support plate 56. The resistor card 58 may be maintained in position by any suitable means, like for example a snap-fit clamping system, screws or glue. For improved measurement accuracy the resistor card 58 is firmly held in place on the support plate 56.

As it will be understood from Fig. 3, the fuel level sensor 28 is designed such that upon assembly of the pivoting arm 32 to the base frame 30, the two arcuate contact areas 38a, 38b of the resistor circuit 38 are located in front of, and in contact with, the two contact fingers 40 fixed to the base frame. An automatic positioning of the resistor card is thus achieved.

Typically, the center of curvature of the arcuate contact areas 38a, 38b coincides with the pivoting axis of the arm 32, which ensures that the contact fingers 40 remain in contact with their respective contact area 38a, 38b when the pivoting arm 32 moves relative to the base frame 30.

As seen in Fig.3, the two contact fingers 40 are positioned on opposite sides of the frame. The contact fingers 40 are separate and electrically isolated from one another. Each of the contact fingers 40 is connected to a respective wire 42. The contact fingers may be easily fixed to the wires 42 by crimping, hence avoiding solering.

It may be noted here that, since the two contact fingers 40 are separate from one another, the resistive and conductive arcs 38a and 38b are electrically connected with one another through a shunt portion (not showm) on the resistor card. This shunt portion is located at the side of the resistor arc with lower resistance. The actual resistance value of the variable resistance assembly 38 thus depends on the position of the contact finger 40 that moves along the resistive arc 38a.

It may be noticed that the two contact fingers 40 are mounted in opposite directions, in a parallel fashion. In this embodiment, the contact fingers 40 are formed as tangs or blade terminals extending from the wall 31b towards the resistor card 58 to engage a respective contact area 38a or 38b. The two fingers 40 are oriented tangentially to the contact areas 38a and 38b and are thus parallel to one another. However they extend from opposite sides of the frame wall 31b. This particular configuration with opposite mounted contact fingers 40 is considered to minimize potential hysteresis behaviors.

Turning back to Fig.3, it may be noticed that the pivoting arm is designed as an arcuate arm with a hollow web body 50, although other designs can be envisaged. In practice, the overall shape and length of the arm 32 is dictated by the shape or depth of the fuel tank and should be long enough to allow the float 72 to float upon the surface of the fuel between a maximum and minimum elevation (i.e. full to empty fuel tank conditions). The rigidity of the pivoting arm 32 and good stability of its pivoting mounting permit improving the measurement accuracy.

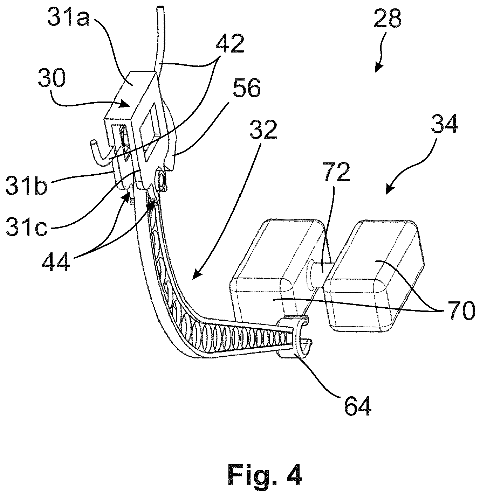

Turning now to Fig.4, the second end 52 of the pivoting arm 32 is preferably connected to the float 34 via another snap-fit connection. For this purpose, the second end 52 of the arm here includes an elastically deformable clamp member 64.

The float 34 itself may generally be designed as buoyant or hollow member of any suitable shape and dimensions. The float 34 may be generally planar and rectangular or cylindrical in shape and floats on the surface of the fuel contained within the fuel tank.

As shown in Fig. 4, the float 34 may be divided in two identical volumes 70 of roughly parallelpipedic shape. The two volumes 70 are linked by a connection rod 72, further configured to fit in the clamp 64 of the pivoting arm 32. A small operational play is provided at the connection with the float to allow it to rotate.

The base frame 30, pivoting arm 32 and float 34 may be conveniently manufactured from plastic material, for example polyoxymethylene.

## Claims

1. Fuel level sensor (28) for sensing the level of liquid fuel in a fuel tank, the sensor comprising:
a base frame (30) to be fixedly mounted relative to the tank;
a pivoting arm (32) pivotally connected to the base frame (30) and carrying a float (34);
a variable resistor assembly (36) configured for translating the position of the float (34) into an electric signal;
**characterized in that** the pivoting arm (32) and the base frame (30) are pivotally connected by a snap-fit connection (44); and **in that** the variable resistor assembly (36) comprises a resistor circuit (38) affixed to the pivoting arm (32) as well as contact fingers (40) fixedly mounted to the base frame (30) and configured to be in contact with the resistor circuit (38) and wherein the pivoting arm (32) comprises, about a first end (48) thereof, first fixing members (54) cooperating with second fixing members (46) located on the base frame (30) to form the snap-fit connection.

2. Fuel level sensor (28) according to claim 1, wherein the pivoting arm (32) comprises a supporting portion (56) carrying the resistor circuit (38), the supporting portion (56) being preferably arranged beyond the first fixing members (54) to form a terminal extension of the pivoting arm (32).

3. Fuel level sensor (28) according to any one of the preceding claims, wherein the base frame (30) is substantially U-shaped and includes a base (31a) from which extend two parallel walls (31b, 31c) defining an inner space; and said pivoting arm (32) is configured such that said supporting portion (56) moves in said inner space.

4. Fuel level sensor (28) according to claims 1 and 3, wherein said second fixing members (46) are positioned in the lower region of said frame (30).

5. Fuel level sensor according to claim 3 or 4, wherein the second fixing members (46) include a pair of deformable clamp members (46) positioned in alignment on each wall; and said first fixing members comprise a pair of aligned cylindrical protrusions (54) protruding on opposite sides of said pivoting arm (32).

6. Fuel level sensor (28) according to any one of the preceding claims, wherein
said resistor circuit (38) comprises two distinct arcuate contact areas (38a, 38b); and
two separate contact fingers (40) are affixed to the parallel wall (31b) facing said resistor circuit to be each in contact with a respective contact area (38a, 38b), the contact fingers (40) engaging their respective contact area (38a, 38b) from opposite sides of the frame (30).

7. Fuel level sensor (28) according to any one of the preceding claims, wherein the pivoting arm (32) is connected at its second end (52) to the float (34) by a snap-fit connection.

8. Fuel level sensor (28) according to claim 7, wherein the float (34) is divided in two substantially identical volumes (70) linked by an intermediate rod (72); and wherein the pivoting arm is connected to the intermediate rod.

9. Fuel level sensor (28) according to claim 8, wherein the second end (52) of the pivoting arm (32) comprises a deformable clamp member (64) configured to cooperate with the connection rod (72) of the float (34).

10. Fuel module (10) comprising a reservoir (18) with a fuel pump (16), and a fuel level sensor (28) according to any one of the preceding claims.

11. Fuel module (10) according to claim 10, wherein the fuel level sensor (28) is fixed to an outer wall (24) of the reservoir (18).
